# FASCICULE DE BREVET EUROPEEN

(11) **EP 1 084 562 B1**
(45) Date de publication et mention de la délivrance du brevet: **10.01.2007**
(21) Numéro de dépôt: 99923660.7
(22) Date de dépôt: 03.06.1999
(51) Int. Cl.: H04M 3/50, H04M 17/02

(54) **APPAREIL D'INTERROGATION D'UN CENTRE SERVEUR**
VORRICHTUNG ZUR ABFRAGE EINES ZENTRAL-SERVERS
APPARATUS FOR QUERYING A CENTRAL SERVICE

(30) Priorité: 03.06.1998 FR 9806963
(43) Date de publication de la demande: 21.03.2001
(73) Titulaire: FRANCE TELECOM, 75015 Paris (FR)
(72) Inventeur: GOY, Philippe, Jean, F-75014 Paris (FR); LE CAMUS, Xavier, Auguste, Gabriel, F-14830 Langrune sur Mer (FR); LEDRAN, Josette, F-91160 Longjumeau (FR)
(74) Mandataire: Habasque, Etienne J. Jean-François
(86) Numéro de dépôt international: PCT/FR1999/001308
(87) Numéro de publication internationale: WO 1999/063740

(56) Documents cités:
- DE-A- 3 445 096
- FR-A- 2 736 234
- US-A- 5 218 633
- US-A- 5 537 461

## Description

La présente invention est relative à un appareil d'interrogation d'un centre serveur tel qu'un appareil téléphonique et se rapporte plus particulièrement à un appareil téléphonique public, du type publiphone.

Certains appareils de ce type comprennent des moyens de composition de numéros téléphoniques pour l'établissement d'une liaison téléphonique avec un centre serveur raccordé à un réseau téléphonique auquel l'appareil est destiné à être connecté, et des moyens d'accès à des services hébergés dans le centre serveur, comprenant des moyens de navigation dans lesdits services et des moyens d'affichage des informations fournies par lesdits services et transmises vers l'appareil en réponse à une action sur les moyens de navigation.

Ce type d'appareil téléphonique permet d'une part d'obtenir une liaison téléphonique avec un correspondant appelé et, d'autre part, d'interroger des services dans lesquels sont stockées des informations relatives, par exemple, à des établissements commerciaux, tels que des hôtels, restaurants, des établissements financiers ...

Il est ainsi possible, par exemple, de connaître le numéro de téléphone de ces établissements, leurs disponibilités et de procéder à une réservation de façon particulièrement simple, dans la mesure où ces appareils peuvent être disposés sur la voie publique.

Le but de l'invention est de fournir un appareil d'interrogation d'un centre serveur du type précité, capable en outre de proposer à l'utilisateur une sélection des informations contenues dans les bases de données, en fonction de la zone géographique dans laquelle l'appareil se situe.

Le document FR-A-2 736 234, qui représente l'état de la technique le plus proche, décrit un procédé d'interrogation d'un centre serveur vocal comprenant la détermination par le serveur d'une indication de la position géographique de l'usager suite à la réception du numéro d'appel du poste appelant, ainsi que la sélection et transmission à l'usager, à partir de cette indication, d'un fichier d'information correspondant à sa position.

L'invention a donc pour objet un appareil d'interrogation selon la revendication 1.

L'utilisateur peut donc disposer d'informations très complètes concernant la zone géographique dans laquelle il se situe.

L'appareil d'interrogation d'un centre serveur suivant l'invention peut en outre comporter une ou plusieurs des caractéristiques décrites dans les revendications dépendantes.

D'autres caractéristiques et avantages ressortiront de la description suivante, donnée uniquement à titre d'exemple, et faite en référence aux dessins annexés sur lesquels :
- la figure 1 est une vue de face d'un appareil téléphonique d'interrogation d'un centre serveur conforme à l'invention ;
- la figure 2 est un schéma synoptique montrant, de façon schématique, l'architecture d'un réseau de télécommunication utilisant l'appareil téléphonique de la figure 1 ;
- la figure 3 est un organigramme, montrant les principales phases du fonctionnement de l'appareil de la figure 1.

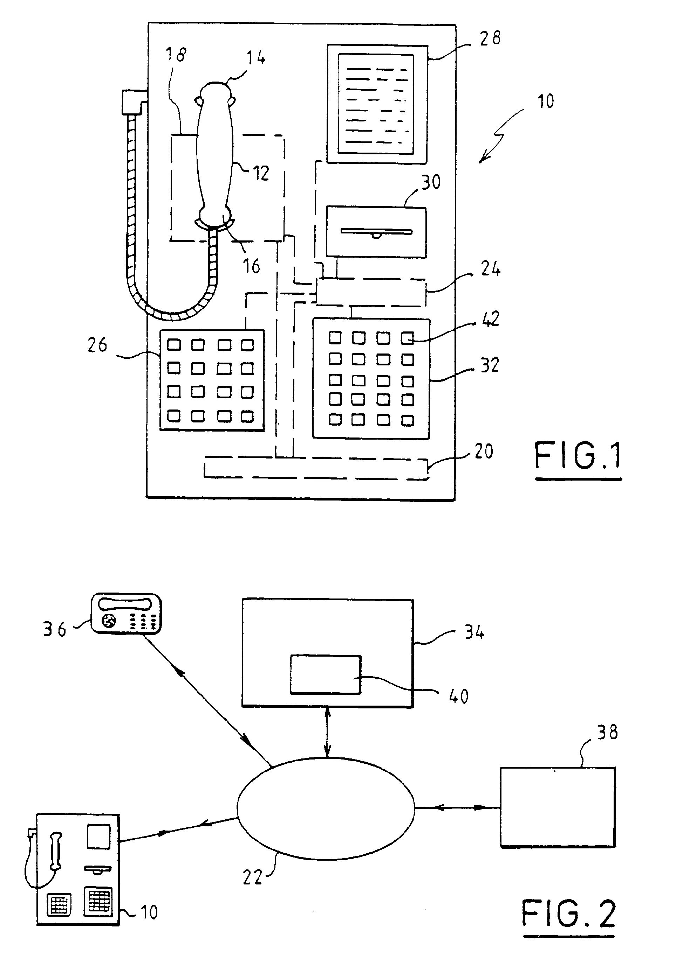

Sur la figure 1, on a représenté un appareil d'interrogation d'un centre serveur conforme à l'invention, désigné par la référence numérique générale 10 et constitué par un publiphone.

Bien entendu, l'invention s'applique également à tout autre type de dispositif capable d'établir une liaison téléphonique avec le serveur, comme par exemple un micro-ordinateur équipé d'un modem.

Le publiphone 10 comporte un combiné téléphonique 12 portant, de façon connue, un écouteur 14 et un microphone 16.

Comme cela est classique, pour l'établissement de communications téléphoniques avec un correspondant, le combiné 12 est raccordé à un circuit interne de téléphonie 18 lui-même connecté à un circuit d'interface 20 en liaison avec un réseau téléphonique câblé 22 (figure 2).

L'appareil téléphonique est en outre doté d'une unité centrale de pilotage 24 appropriée pour l'utilisation envisagée, représentée en trait mixte sur la figure 1 à laquelle sont raccordés un clavier 26 de composition de numéros téléphoniques, un afficheur 28, un lecteur 30 de cartes à puce de paiement de communications téléphoniques, un deuxième clavier 32 d'accès à des services télématiques, comme cela sera décrit en détail par la suite, et le circuit de téléphonie 18.

L'unité centrale de pilotage 24 est en outre reliée, au circuit d'interfaçage 20 pour sa mise en communication avec le réseau téléphonique câblé 22.

En référence à la figure 2, l'appareil 10 qui vient d'être décrit est destiné à être mis en communication d'une part avec un réseau de publiphonie 34 associé au réseau téléphonique câblé 22 en vue de sa mise en communication avec un ensemble de postes téléphoniques, tels que 36, et d'autre part, avec un centre serveur 38 raccordé au réseau téléphonique 22 et dans lequel est hébergé un ensemble de services permettant à un utilisateur d'obtenir des informations ordonnées de différentes natures, comme par exemple des informations météorologiques, des informations concernant des établissements commerciaux, tels que des hôtels, des restaurants, .... des informations permettant l'appel d'un véhicule de transport individuel, comme par exemple un taxi, ou semi-collectif, par exemple un mini-bus ou encore, des informations sportives, ...

Comme cela est classique, l'appareil 10 est raccordé au réseau de publiphonie 34 par l'intermédiaire d'une unité de rattachement 40.

Sur la figure 2, on a représenté un seul appareil 10, mais bien entendu, le réseau de télécommunication peut être équipé d'un nombre quelconque des tels appareils raccordés par groupes à plusieurs unités de rattachement 40, par exemple par groupes de 100 appareils.

Ces appareils permettent, d'une part, d'obtenir une communication téléphonique avec un poste téléphonique 36 d'un correspondant appelé, et. d'autre part, de consulter les services hébergés dans le serveur 38 et ce, en fonction de l'emplacement géographique des appareils 10.

Pour l'obtention d'une communication téléphonique avec un poste téléphonique 36, l'appareil téléphonique 10 selon l'invention s'utilise de façon classique en décrochant le combiné 12, en insérant une carte à puce de paiement dans le lecteur 30, puis en composant le numéro de téléphone du correspondant à l'aide du clavier 26 de numérotation.

La consultation de l'un ou de plusieurs services ou bases de données du serveur 38 s'effectue en insérant une carte à puce de paiement dans le lecteur 30 puis en sélectionnant le service souhaité, parmi les services présentés sur l'afficheur 28, en appuyant sur une touche correspondante préprogrammés, telle que 42, du deuxième clavier 32, ainsi que sur des touches de défilement et de sélection, de ce deuxième clavier 32.

Comme cela sera décrit en détail par la suite, dès que la liaison téléphonique s'établit avec le centre serveur 38, l'appareil 10 envoie, en direction de ce dernier, des informations représentatives de son emplacement géographique en vue de la sélection, depuis le service sélectionné, des données correspondant à son emplacement.

On notera que la sélection d'un service depuis le deuxième clavier 32 provoque la composition automatique, par l'appareil 10, du numéro d'appel du serveur 38 qui provoque, en réponse, dès l'établissement de la liaison téléphonique, l'affichage des données du service.

On notera également que la liaison téléphonique entre l'appareil 10 et les postes téléphoniques 36 et entre l'appareil 10 et le centre serveur 38 s'effectue sous le contrôle de l'unité centrale de pilotage 24 selon deux protocoles de télécommunication distincts, à savoir, respectivement, un protocole utilisant un canal B d'un réseau "Numéris" et un canal D de ce réseau Numéris pour le dialogue avec le centre serveur 38, lequel protocole de communication utilisant le canal D étant un protocole de communication à tarif spécifique, c'est-à-dire dans lequel le paiement des télécommunications s'effectue sous la forme de forfaits.

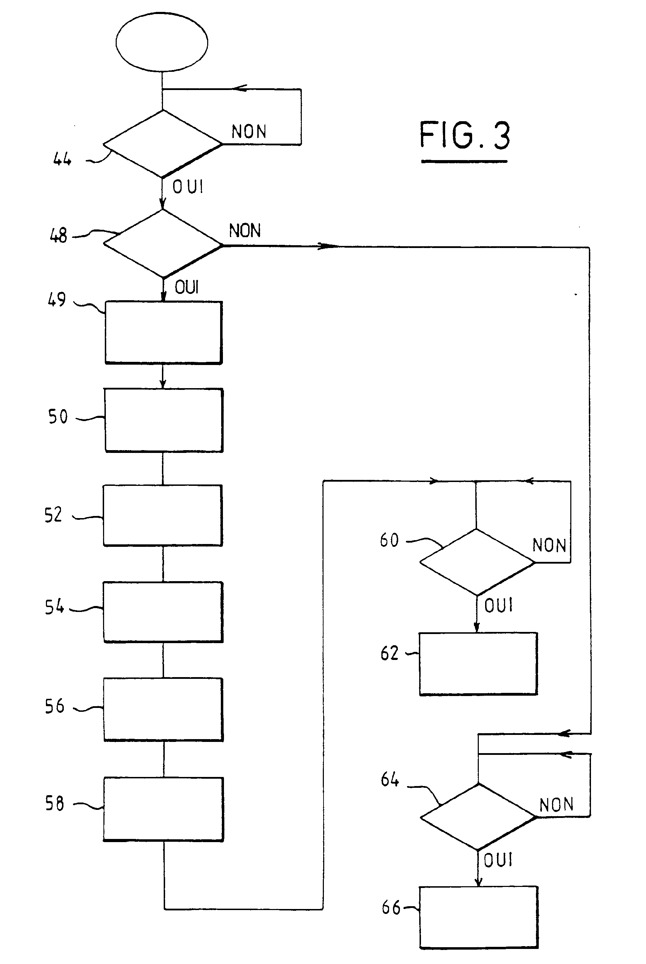

La description du protocole de communication entre l'appareil 10 et le centre serveur 38 et entre l'appareil 10 et un ou plusieurs postes téléphoniques 36 va maintenant être faite en référence à la figure 3.

Ce protocole débute par une première étape 44 au cours de laquelle l'appareil 10 détecte la présence d'une carte à puce dans le lecteur 30 pour le paiement de l'accès au service.

Au cours de l'étape 48 suivante, l'appareil 10 surveille l'état des touches 42 du deuxième clavier 32 de manière à détecter si l'utilisateur a enfoncé l'une des touches 42 correspondant à l'un des services proposés.

Suite à l'enfoncement d'une touche 42, l'unité centrale de pilotage 32 provoque à l'étage 49 la composition automatique du numéro téléphonique du centre serveur.

A l'issue de cette étape 49, l'utilisateur dispose de toutes les informations contenues dans le service sélectionné et peut naviguer dans ce dernier en sélectionnant des sous-menus à l'aide de touches de défilement et de sélection du deuxième clavier 32.

Toutefois, et selon l'invention, dans le but de fournir à l'utilisateur des informations très précises concernant la zone géographique dans laquelle il se situe, au cours de l'étape 50 suivante, c'est-à-dire si l'utilisateur a enfoncé une touche 42 de sélection d'un des services, le centre serveur 38 demande à l'appareil 10 l'adresse postale du lieu dans laquelle il se situe, en envoyant à ce dernier un message d'interrogation correspondant.

Il est à noter que l'adresse de chaque appareil 10 est stockée dans l'unité de rattachement 40, à laquelle il est relié afin de permettre un remplacement relativement aisé des appareils 10.

Par conséquent, au cours de l'étape 52 suivante, l'unité centrale de pilotage 24 provoque l'émission, en direction de l'unité de rattachement 40, d'un signal de commande de l'envoi, par cette dernière, d'informations représentatives de l'emplacement géographique de l'appareil.

Après réception de son adresse, l'appareil 10 envoie ces informations vers le centre serveur 38 sous le contrôle de l'unité centrale de pilotage 24 (étape 54).

Lors de l'étape 56 suivante, le centre serveur 38 effectue une sélection des données de chaque service sélectionné de manière à n'envoyer, vers l'appareil 10, que les informations correspondant à la zone géographique dans laquelle il se situe (étape 58).

Dans le cas où les données extraites du service sélectionné et affichées sur l'écran 28 comportent des numéros téléphoniques de correspondants, lors de l'étape 60 suivante, l'appareil 10 vérifie si un numéro de téléphone a été sélectionné.

Si tel est le cas, l'unité centrale de pilotage 24 et le circuit de téléphonie 18 effectuent la composition automatique de ce numéro en vue d'établir une liaison téléphonique avec le correspondant (étape 62).

On notera par ailleurs que si, lors de l'étape 48 précédente, aucune sélection de services n'a été effectuée, lors de l'étape 64 suivante, l'appareil 10 détecte si l'utilisateur a composé de façon manuelle un numéro téléphonique sur le premier clavier 26.

Si tel est le cas, lors de l'étape 66 suivante, une liaison téléphonique correspondante s'établit, comme cela est classique.

On conçoit que l'invention qui vient d'être décrite permet, d'une part, d'obtenir une liaison téléphonique avec un poste téléphonique d'un correspondant appelé et, d'autre part, d'obtenir une liaison téléphonique avec un centre serveur pour la consultation de services, et ce, en fonction de l'emplacement géographique dans lequel l'appareil 10 se situe.

Ainsi, le centre serveur 38 ayant à sa disposition l'emplacement géographique exacte de l'appareil 10, il est possible d'obtenir par exemple des renseignements concernant l'emplacement des établissements commerciaux les plus proches, tels qu'hôtels, restaurants, d'obtenir, en temps réel, des informations relatives à la disponibilité de ces établissements, et de pouvoir effectuer une réservation de façon particulièrement aisée dans la mesure où l'appareil permet l'obtention d'une liaison téléphonique avec ces derniers.

Il est également possible, par la sélection d'un service approprié, d'obtenir des informations concernant la liste des points de vente de cartes à puce de paiement les plus proches, de commander des véhicules de transport individuel, de type taxis, ou semi-collectifs, de type mini-bus, d'obtenir des informations sportives concernant la zone géographique considérée ainsi que des informations météorologiques.

On notera enfin qu'il est possible de prévoir, sur le clavier 32, des touches de sélection additionnelles, permettant la sélection de zones géographiques différentes en vue d'obtenir des informations complémentaires concernant une ou plusieurs zones géographiques sélectionnées.

L'invention n'est pas limitée au mode de réalisation décrit.

On a en effet considéré dans ce qui précède, que l'obtention, par le centre serveur, des informations concernant l'emplacement géographique du publiphone, objet de l'invention, s'effectue après action sur l'une des touches de sélection des services.

Il serait également possible, en variante, de prévoir l'émission, par le centre serveur, du signal d'interrogation dès l'établissement de la liaison téléphonique entre ce dernier et l'appareil téléphonique.

## Revendications

1. Appareil d'interrogation d'un centre serveur, du type comprenant des moyens (26,42) de composition de numéros téléphoniques pour l'établissement d'une liaison avec un centre serveur (38) raccordé à un réseau téléphonique (22) auquel l'appareil est destiné à être connecté, et des moyens d'accès (28,32) à des services hébergés dans le centre serveur (38), comprenant des moyens de navigation (32) dans lesdits services et des moyens d'affichage (28) des données fournies par lesdits services et transmises vers l'appareil en réponse à une action sur les moyens de navigation (32), **caractérisé en ce qu'**il comporte des moyens de transmission (24), vers le centre serveur, d'informations représentatives de l'emplacement géographique de l'appareil en vue de la sélection, dans lesdits services, de données correspondant à l'emplacement de l'appareil, et **en ce que** les informations représentatives de l'emplacement géographique de l'appareil étant stockées dans une unité (40) de rattachement de l'appareil dans un réseau de publiphonie (34), l'appareil comporte des moyens (24) d'émission d'un signal de commande de l'envoi, par l'unité de rattachement (40), desdites informations en direction de l'appareil d'interrogation.

2. Appareil selon la revendication 1, **caractérisé en ce qu'**il constitue un publiphone (10) destiné à être raccordé à un réseau téléphonique câblé (22) et équipé d'un lecteur (30) de cartes à puce de paiement de télécommunications, et **en ce qu'**il comporte des moyens (18,20,24) de mise en communication avec un poste téléphonique d'un correspondant appelé selon un premier protocole de communication et avec le centre serveur (38) selon un deuxième protocole de communication, lesdits protocoles utilisant des canaux de télécommunication distincts.

3. Appareil selon l'une des revendications 1 et 2, **caractérisé en ce que** lesdites données fournies par le service comportant des numéros téléphoniques de correspondants situés dans la zone géographique de l'appareil, il comporte des moyens de sélection (32) desdits numéros, raccordés à des moyens (18,24) de composition automatiques de numéros sélectionnés.

4. Appareil selon l'une quelconque des revendications 1 à 4, **caractérisé en ce qu'**il constitue un moyen d'accès à des bases de données choisies parmi les données relatives à des établissements commerciaux, des données météorologiques, des données relatives à des actualités sportives ou culturelles et des données adaptées pour l'appel de véhicules de transport individuels ou semi-collectifs.

5. Appareil selon l'une des revendications 3 et 4, **caractérisé en ce qu'**il constitue un moyen d'accès à une base de données comportant des informations relatives à des points de vente de cartes à puce de paiement de télécommunications.

## Claims

1. Device for querying a server centre, of the type comprising means (26, 42) of dialling telephone numbers to set up a link with a server centre (38) connected to a telephone network (22) to which the device is intended to be connected, and means (28, 32) of accessing services hosted in the server centre (38), comprising means (32) of browsing in said services and means (28) of displaying the data supplied by said services and transmitted to the device in response to an action on the browsing means (32), **characterized in that** it comprises means (24) of transmitting, to the server centre, information representative of the geographic location of the device with a view to the selection, in said services, of data corresponding to the location of the device, and **in that**, the information representative of the geographic location of the device being stored in a parent unit (40) of the device in a payphone network (34), the device includes means (24) of emitting a signal controlling the sending, by the parent unit (40), of said information towards the querying device.

2. Device according to Claim 1, **characterized in that** it constitutes a payphone (10) intended to be connected to a cable telephone network (22) and equipped with a telecommunication payment chip card reader (30), and **in that** it comprises means (18, 20, 24) of entering into communication with a telephone set of a called party according to a first communication protocol and with the server centre (38) according to a second communication protocol, said protocols using separate telecommunication channels.

3. Device according to one of Claims 1 and 2, **characterized in that** said data supplied by the service comprising telephone numbers of parties located in the geographic area of the device, it comprises means (32) of selecting said numbers, connected to means (18, 24) of automatically dialling selected numbers.

4. Device according to any one of Claims 1 to 3, **characterized in that** it constitutes a means of accessing databases chosen from the data relating to commercial establishments, meteorological data, sport or cultural activity-related data and data adapted for calling individual or semi-collective transport vehicles.

5. Device according to one of Claims 3 and 4, **characterized in that** it constitutes means of accessing a database comprising information relating to points of sale for telecommunication payment chip cards.

## Patentansprüche

1. Gerät zur Abfrage einer Serverzentrale, von der Art, die Mittel (26, 42) zum Wählen von Telefonnummern für den Aufbau einer Verbindung mit einer an ein Telefonnetz (22) angeschlossenen Serverzentrale (38), mit der das Gerät verbunden werden soll, und Zugriffsmittel (28, 32) zu in der Serverzentrale (38) gehosteten Diensten aufweist, das Mittel (32) zum Navigieren in den Diensten und Mittel (28) zur Anzeige der Daten aufweist, die von den Diensten geliefert und als Antwort auf eine Einwirkung auf die Navigationsmittel (32) an das Gerät übertragen werden, **dadurch gekennzeichnet, dass** es Mittel (24) zur Übertragung von Informationen an die Serverzentrale aufweist, die für den geographischen Standort des Geräts repräsentativ sind, um in den Diensten Daten auszuwählen, die dem Standort des Geräts entsprechen, und dass, da die für den geographischen Standort des Geräts repräsentativen Informationen in einer Einheit (40) für den Anschluss des Geräts in einem Netz von öffentlichen Fernsprechzellen (34) gespeichert sind, das Gerät Mittel (24) zum Senden eines Steuersignals zum Versenden der Informationen in Richtung des Abfragegeräts durch die Anschlusseinheit (40) aufweist.

2. Gerät nach Anspruch 1, **dadurch gekennzeichnet, dass** es eine öffentliche Fernsprechzelle (10) bildet, die dazu bestimmt ist, an ein verkabeltes Telefonnetz (22) angeschlossen zu werden, und die mit einem Lesegerät (30) für Chipkarten zur Zahlung von Fernmeldeverbindungen ausgestattet ist, und dass es Mittel (18, 20, 24) zur Verbindung mit einem Telefonapparat eines angerufenen Teilnehmers gemäß einem ersten Kommunikationsprotokoll und mit der Serverzentrale (38) gemäß einem zweiten Kommunikationsprotokoll aufweist, wobei die Protokolle unterschiedliche Fernmeldekanäle verwenden.

3. Gerät nach einem der Ansprüche 1 und 2, **dadurch gekennzeichnet, dass** es, da die vom Dienst gelieferten Daten Telefonnummern von Teilnehmern enthalten, die sich in der geographischen Zone des Geräts befinden, Mittel (32) zur Auswahl der Nummern aufweist, die an Mittel (18, 24) zum automatischen Wählen von ausgewählten Nummern angeschlossen sind.

4. Gerät nach einem der Ansprüche 1 bis 3, **dadurch gekennzeichnet, dass** es ein Zugriffsmittel zu Datenbasen bildet, die aus den Daten betreffend Handelsunternehmen, meteorologische Daten, Daten betreffend sportliche oder kulturelle Nachrichten und Daten bestehen, die für den Anruf individueller oder Paratransit-Transportfahrzeuge ausgelegt sind.

5. Gerät nach einem der Ansprüche 3 und 4, **dadurch gekennzeichnet, dass** es ein Zugriffsmittel zu einer Datenbasis bildet, die Informationen betreffend Verkaufspunkte von Chipkarten zur Zahlung von Fernmeldeverbindungen aufweist.
